# EUROPEAN PATENT SPECIFICATION

(11) **EP 1 820 394 B1**
(45) Date of publication and mention of the grant of the patent: **08.04.2009**
(21) Application number: 06075386.0
(22) Date of filing: 21.02.2006
(51) Int. Cl.: A01K 61/00

(54) **Method for joining two flexible grids and a fish pen manufactured therefrom**
Verfahren zum Verbinden von 2 flexiblen Gittern und ein Fischkäfig
Prodédé pour joindre deux grilles flexibles et un cage de pisciculture

(43) Date of publication of application: 22.08.2007
(73) Proprietor: TenCate Geosynthetics Netherlands B.V., 7602 HR Almelo (NL)
(72) Inventor: Hofmans, Gerrit Willem Klaas, 7471 NB Goor (NL); Dortland, Gerhard-Jan, 7571 VS Oldenzaal (NL)
(74) Representative: 't Jong, Bastiaan Jacob

(56) References cited:
- DE-U1- 29 704 770
- GB-A- 1 126 261
- US-A- 5 299 530
- US-A1- 2005 183 331
- US-B1- 6 267 079

## Description

The invention relates to a method for joining two flexible grids. Such flexible grids, which comprise a woven netting coated with a thermoplastic material are known in the field of land construction and are used to stabilize the soil.

The flexible grids are manufactured by weaving a netting and coating afterwards the netting with a thermoplastic material. The flexible grids are supplied in lengths and therefore limited to the maximum width of the weaving machine. For use in land construction the lengths of flexible grid are placed adjacent of each other on the soil to be stabilized. It is not necessary to connect the length of flexible grid to each other.

In the field of fish farming, large fish pens are used to breed fish in open water. Such fish pens are commonly manufactured from netting, which is also used on fishing boats. With this netting fish pens with a circumference of typically 100m or more and a depth of 30m or more are made (smaller or larger fish pens are also used). The different parts of netting are sewn together in order to get a closed fish pen from which bred fish cannot escape.

The disadvantage of conventional netting is that it is extremely flexible and easily deformable, such that predators, like seals, can easily attack fish, which swims on the other side of the netting. The predator can just bite through the netting by deforming it.

The flexible grid of a coated netting is more rigid than conventional netting but still flexible. Such flexible grids prevent predators of attacking the bred fish. However due to the relative stiffness of the flexible grid, the conventional way of manufacturing a fish pen by sewing the different grid parts together creates a seam that is strong, but is more difficult to manipulate and produces a rough seam, which can damage the fish should they come in contact with it. In order to have the required strength for the fish pen several rows of cells of the grid must be sewn together. Due to the relative stiffness of the grid this provides tension within the seam which is not advantageous for the strength of the fish pen.

It is therefore an object of the invention to provide a method for joining two flexible grids, which does alleviate the above-mentioned disadvantages.

This object is achieved by a method for joining two flexible grids, said grids comprising a woven netting coated with a thermoplastic material, said method comprising the steps of:
- creating an overlapping area of at least an edge of a first grid and a second layer comprising compatible thermoplastic material;
- heating the overlapping area in order to soften the thermoplastic material in the overlapping area;
- compressing the overlapping area.

By creating an overlapping area of the two elements and by heating the thermoplastic material, an intimate connection is created between the two elements providing sufficient strength, while also providing a smooth transition from the first element to the second element. The one element is a flexible grid, while the second element is a second layer comprising compatible thermoplastic material, which can be according to an embodiment of the method of the invention,an edge of a second flexible grid.

In a preferred method according to the invention the second layer is a strip of woven material coated with the compatible thermoplastic material and wherein the strip overlaps both with an edge of the first grid and with an edge of the second grid.

The strip of woven material coated with compatible thermoplastic material provides an esthetic connection of the two grids, because the deformed thermoplastic material is covered by the outer surface of the strip of woven material. This reduces the chance of any damage to the bred fish.

According to a further embodiment of the method according to the invention a second strip of woven material coated with the compatible thermoplastic material is arranged on the opposite side of the first and second grid, such that the grids are sandwiched between the two strips. This provides for an even better finish of the joint.

In yet another embodiment of the method according to the invention at least part of the selvedge of a flexible grid is used for the overlapping area. When weaving the netting to be coated by the thermoplastic material, an selvedge is always created at both sides of the length of netting. Such a selvedge is functionally similar to a strip of woven material and provides therefor a cost-effective way of joining to flexible grids.

The invention also relates to a method for manufacturing a fish pen for breeding fish in open water, the method comprising the steps:
- providing flexible grids;
- joining the flexible grids according to the method of the invention, to form walls of the fish pen.

Such a fish pen according to the invention has the advantage of the relatively stiff flexible walls, which prevent predators of attacking the bred fish. Furthermore the joining of the flexible grids with a method according to the invention provides sufficient strength of the joint for a fish pen while also having a smooth joint, which reduces the risks of fish being damaged by the joint. An additional advantage of the coated netting that it has less attachments anchorage points for algae. With conventional netting the alga can better get hold of the netting due to the open structure of the weaving. Now with the flexible grids according to the invention this open structure is coated by the thermoplastic material which decreases the amount of alga during the life-time of a fish pen.

According to a further preferred embodiment of the method for manufacturing a fish pen, the flexible grids are joined according to the method of the invention and at least the end of one strip is folded back in order to form a loop, wherein the folded-back end of the strip is attached to the strip by heating the thermoplastic material and compressing the heated material.

For fish pens it is necessary to use weights in order to keep the fish pen in the desired shape and under water. The weights are suspended below the bottom of the fish pen and the forces of the weights must be transmitted to the fish pen. Also, dynamic loads of waves and currents must be transferred. The netting itself is not sufficiently strong to transfer these forces. Conventionally separate cables are used, but with the method according to the invention, the woven strips can be used as integrated cables.

In another embodiment of the method according to the invention, the method comprises the steps of:
- folding back an edge of a flexible grid;
- heating the material of the flexible grid at the contact zone of the edge and the grid;
- compressing the heated material of the contact zone.

By folding back an edge of a flexible grid, a channel is formed in the grid, which can be used for several purposes. In a further preferred embodiment a circumferential wall and a bottom wall are provided by joining flexible grids;
wherein the peripheral edge of the bottom wall and the adjacent edge of the circumferential wall are both provided with a folded-back edge; comprising the steps of:
- interlocking the folded back edges of the bottom wall and the circumferential wall; and
- leading a string through the interlocked edges in order to connect the bottom wall with the circumferential wall.

Such a connection of circumferential wall and bottom wall has the advantage that the bottom wall can be disconnected from the circumferential wall, which facilitates transport of a fish pen manufactured according to the method. Preferably, the string is a rope or a cable.

The invention also relates to a fish pen for breeding fish in open water manufactured according to the invention.

These and other advantages of the invention will be elucidated in conjunction with the accompanying drawings.
Figure 1 shows in perspective view a fish pen according to the invention.
Figure 2 shows a step of the method for joining two flexible grids.
Figure 3 shows a second step in the method shown in figure 2.

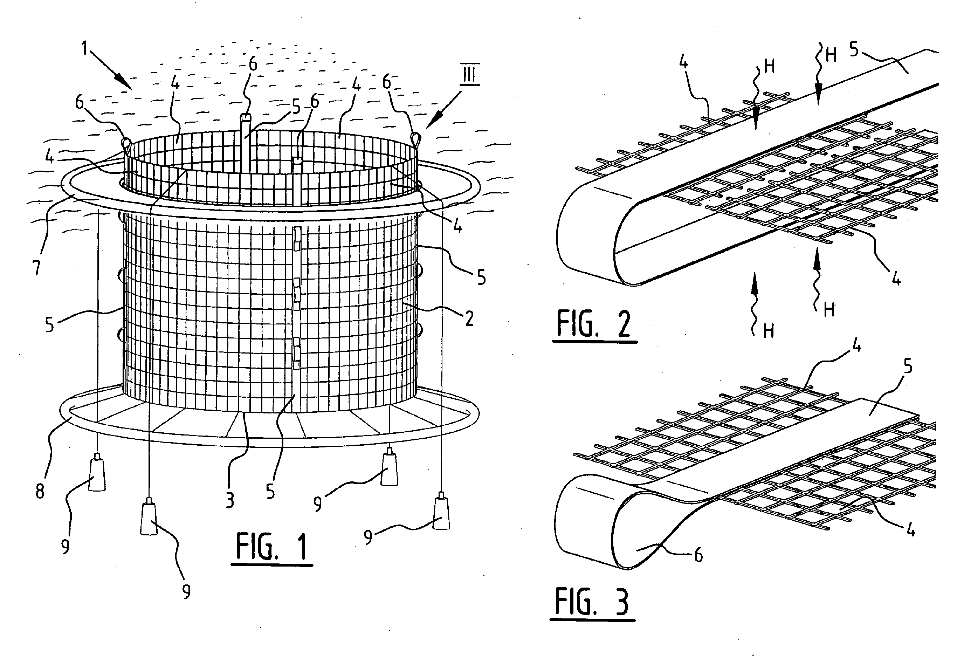

Figure 1 shows a fish pen 1 having a circumferential wall 2 and a bottom wall 3. The circumferential wall consists out of four lengths of flexible grid 4, which are joined to each other at the strips 5. At the top of each strip 5 a loop 6 is provided for hoisting the fish pen 1 out of the water. Also loops are provided at certain depth intervals.

The fish pen 1 is further provided with a floating ring 7 which provides a walkway around the fish pen.

At the bottom a weighted ring 8 is provided which keeps the fish pen in shape and under water in combination with the separate weights 9.

In figure 2 a step according to the method of the invention is shown in which two flexible grids 4, which are a woven netting coated with a thermoplastic material, and a strip 5 is provided. The strip 5 is also a woven material coated with a compatible thermoplastic material. Heat is supplied to the overlapping area of strip 5 and grids 4, such that the thermoplastic material weakens.

Then, as shown in figure 3, the strip 5 and grids 4 are pressed together and the thermoplastic material is allowed to cool down such that a joint between the two grids 4 is provided. By folding back the strip 5 a loop 6 is additionally provided.

## Claims

1. Method for manufacturing a fish pen for breeding fish in open water, the method comprising the steps:
- providing flexible grids comprising a woven netting coated with a thermoplastic material;
- joining the flexible grids to form walls of the fish pen, by
- creating an overlapping area of at least an edge of a first grid and a second layer comprising compatible thermoplastic material;
- heating the overlapping area in order to soften the thermoplastic material in the overlapping area;
- compressing the overlapping area.

2. Method according to claim 1, wherein the second layer is an edge of a second flexible grid.

3. Method according to claim 1, wherein the second layer is a strip of woven material coated with the compatible thermoplastic material and wherein the strip overlaps both with an edge of the first grid and with an edge of the second grid.

4. Method according to claim 3, comprising the additional step of arranging a second strip of woven material coated with the compatible thermoplastic material, on the opposite side of the first and second grid, such that the grids are sandwiched between the two strips.

5. Method according to any of the preceding claims, wherein at least part of the selvedge of a flexible grid is used for the overlapping area.

6. Method according to any of the claims 3 - 5, wherein at least the end of one strip is folded back in order to form a loop, wherein the folded back end of the strip is attached to the strip by heating the thermoplastic material and compressing the heated material.

7. Method according to claim 6, comprising the step of:
- folding back an edge of a flexible grid;
- heating the material of the flexible grid at the contact zone of the edge and the grid;
- compressing the heated material of the contact zone.

8. Method according to claim 7, wherein a circumferential wall and a bottom wall are provided by joining flexible grids;
wherein the peripheral edge of the bottom wall and the adjacent edge of the circumferential wall are both provided with a folded back edge; comprising the steps of:
- interlocking the folded back edges of the bottom wall and the circumferential wall; and
- leading a string through the interlocked edges in order to connect the bottom wall with the circumferential wall.

9. Method according to claim 8, wherein the string is a rope or a cable.

10. Fish pen for breeding fish in open water manufactured according to any of the preceding claims.

## Patentansprüche

1. Verfahren zur Herstellung eines Fischkäfigs für die Zucht von Fischen in offenem Gewässer, wobei das Verfahren die folgenden Schritte aufweist:
- Bereitstellen flexibler Gitter die ein gewebtes Netzwerk aufweisen, das mit einem thermoplastischen Material beschichtet ist;
- Verbinden der flexiblen Gitter zur Formung von Wänden für den Fischkäfig, durch
- Erzeugen einer überlappenden Zone von mindestens einem Rand eines ersten Gitters und einer zweiten Schicht, die ein kompatibles thermoplastisches Material aufweist;
- Erhitzen der überlappenden Zone zum Erweichen des thermoplastischen Materials in der überlappenden Zone;
- Zusammenpressen der überlappenden Zone.

2. Verfahren gemäß Anspruch 1, wobei die zweite Schicht der Rand eines zweiten flexiblen Gitters ist.

3. Verfahren gemäß Anspruch 1, wobei die zweite Schicht ein Streifen eines gewobenen Materials ist, beschichtet mit dem kompatiblen thermoplastischen Material, und wobei der Streifen sowohl mit einem Rand des ersten Gitters als auch mit einem Rand des zweiten Gitters überlappt.

4. Verfahren gemäß Anspruch 3, das den zusätzlichen Schritt, Anordnen eines zweiten Streifens eines gewobenen Materials, beschichtet mit dem kompatiblen thermoplastischen Material, auf der gegenüberliegenden Seite des ersten und zweiten Gitters, so dass die Gitter zwischen die zwei Streifen gelegt sind, aufweist.

5. Verfahren gemäß einem der vorangegangen Ansprüche, wobei mindestens ein Teil der Webkante eines flexiblen Gitters für die überlappende Zone verwendet wird.

6. Verfahren gemäß einem der Ansprüche 3 - 5, wobei mindestens das Ende eines Streifens zur Formung einer Schlaufe zurückgebogen ist, wobei das zurückgebogene Ende des Streifens an dem Streifen durch Erhitzen des thermoplastischen Materials und Zusammenpressen des erhitzten Materials befestigt wird.

7. Verfahren gemäß Anspruch 6, das den Schritt aufweist:
- Zurückfalten eines Randes eines flexiblen Gitters;
- Erhitzen des Materials des flexiblen Gitters an der Kontaktzone des Randes und dem Gitter;
- Zusammenpressen des erhitzten Materials der Kontaktzone.

8. Verfahren gemäß Anspruch 7, worin eine Umfangswand und eine Bodenwand durch Zusammenfügen von flexiblen Gittern vorgesehen ist;
wobei der periphere Rand der Bodenwand und der angrenzenden Rand der Umfangswand beide mit einem zurückgebogenen Rand versehen sind; die Schritte aufweisend:
- Verblockung der zurückgebogenen Ränder der Bodenwand und der Umfangswand; und
- Durchführen einer Schnur durch die verblockten Ränder zur Verbindung der Bodenwand mit der Umfangswand.

9. Verfahren gemäß Anspruch 8, wobei die Schnur ein Seil oder ein Kabel ist.

10. Ein Fischkäfig zur Zucht von Fischen in offenem Gewässer, hergestellt gemäß einem der vorangegangenen Ansprüche.

## Revendications

1. Procédé pour fabriquer une cage de pisciculture pour élever les poissons en eau libre, le procédé comprenant les étapes consistant à :
prévoir des grilles flexibles comprenant un filet tissé recouvert avec un matériau thermoplastique ;
assembler les grilles flexibles pour former des parois de la cage de pisciculture, avec les étapes consistant à :
créer une zone de chevauchement d'au moins un bord d'une première grille et une seconde couche comprenant le matériau thermoplastique compatible ;
chauffer la zone de chevauchement afin de ramollir le matériau thermoplastique dans la zone de chevauchement ;
comprimer la zone de chevauchement.

2. Procédé selon la revendication 1, dans lequel la seconde couche est un bord d'une seconde grille flexible.

3. Procédé selon la revendication 1, dans lequel la seconde couche est une bande de matériau tissé recouverte avec le matériau thermoplastique compatible et dans lequel la bande chevauche à la fois un bord de la première grille et un bord de la seconde grille.

4. Procédé selon la revendication 3, comprenant l'étape supplémentaire consistant à agencer une seconde bande de matériau tissé recouverte avec le matériau thermoplastique, sur le côté opposé des première et seconde grilles, de sorte que les grilles sont prises en sandwich entre les deux bandes.

5. Procédé selon l'une quelconque des revendications précédentes, dans lequel au moins une partie de la lisière d'une grille flexible est utilisée pour la zone de chevauchement.

6. Procédé selon l'une quelconque des revendications 3 à 5,
dans lequel au moins l'extrémité d'une bande est repliée afin de former une boucle, dans lequel l'extrémité repliée de la bande est fixée à la bande en chauffant le matériau thermoplastique et en comprimant le matériau chauffé.

7. Procédé selon la revendication 6, comprenant l'étape consistant à :
replier un bord d'une grille flexible ;
chauffer le matériau de la grille flexible au niveau de la zone de contact du bord et de la grille ;
comprimer le matériau chauffé de la zone de contact.

8. Procédé selon la revendication 7, dans lequel une paroi circonférentielle et une paroi inférieure sont formées en assemblant les grilles flexibles ;
dans lequel le bord périphérique de la paroi inférieure et le bord adjacent de la paroi circonférentielle sont tous deux dotés d'un bord replié ; comprenant les étapes consistant à :
bloquer les bords repliés de la paroi inférieure et de la paroi circonférentielle ; et
amener une ficelle à travers les bords bloqués afin de raccorder la paroi inférieure avec la paroi circonférentielle.

9. Procédé selon la revendication 8, dans lequel la ficelle est une corde ou un câble.

10. Cage de pisciculture pour élever des poissons en eau libre fabriquée selon l'une quelconque des revendications précédentes.
